# EUROPÄISCHE PATENTANMELDUNG

(11) **EP 2 899 045 A1**
(43) Veröffentlichungstag der Anmeldung: **29.07.2015**
(21) Anmeldenummer: 15152622.5
(22) Anmeldetag: 27.01.2015
(51) Int. Cl.: B60J 7/22

(54) **Windstopeinrichtung**

(30) Priorität: 28.01.2014 DE 102014100978
(71) Anmelder: Scambia Holdings Cyprus Limited, 3106 Limassol (CY)
(72) Erfinder: Neumann, Peter, 71720 Oberstenfeld (DE)
(74) Vertreter: Hoeger, Stellrecht & Partner Patentanwälte

(57) **Zusammenfassung**

Um bei einer Windstopeinrichtung für Kraftfahrzeuge, insbesondere für Cabrio-Fahrzeuge, umfassend ein Windschott mit einem sich in einer Fahrzeugquerrichtung erstreckenden Windschottrahmens und einem eine Rahmenöffnung des Windschottrahmens verschließenden strömungshindernden Element, wobei das Windschott durch mindestens ein Gelenk um eine Windschottfaltachse zwischen einer entfalteten Stellung und einer zusammengefalteten Stellung faltbar ist, eine mit dem Windschott um eine Schwenkachse schwenkbar verbundene Abdeckung mit einem sich in der Fahrzeugquerrichtung und von der Schwenkachse weg erstreckenden Abdeckungsrahmen und mit einem eine Rahmenöffnung des Abdeckungsrahmens verschließenden strömungshindernden Element, wobei der Abdeckungsrahmen durch mindestens ein Gelenk um eine Abdeckungsfaltachse zwischen einer entfalteten Stellung und einer zusammengefalteten Stellung faltbar ist, die Stabilität zu erhöhen, wird vorgeschlagen, dass mindestens eines der Gelenke in der entfalteten Stellung durch eine Blockiereinrichtung gegen ein Falten in die zusammengefaltete Stellung blockierbar ist.

## Beschreibung

Die Erfindung betrifft eine Windstopeinrichtung für Kraftfahrzeuge, insbesondere für Cabrio-Fahrzeuge, umfassend ein Windschott mit einem sich in einer Fahrzeugquerrichtung erstreckenden Windschottrahmen und einem eine Rahmenöffnung des Windschottrahmens verschließenden strömungshindernden Element, wobei das Windschott durch mindestens ein Gelenk um eine Windschottfaltachse zwischen einer entfalteten Stellung und einer zusammengefalteten Stellung faltbar ist, eine mit dem Windschott um eine Schwenkachse schwenkbar verbundene Abdeckung mit einem sich in der Fahrzeugquerrichtung und von der Schwenkachse weg erstreckenden Abdeckungsrahmen und mit einem eine Rahmenöffnung des Abdeckungsrahmens verschließenden strömungshindernden Element, wobei der Abdeckungsrahmen durch mindestens ein Gelenk um eine Abdeckungsfaltachse zwischen einer entfalteten Stellung und einer zusammengefalteten Stellung faltbar ist.

Derartige Windstopeinrichtungen sind aus dem Stand der Technik bekannt.

Bei diesen Windschotteinrichtungen besteht allerdings das Problem, dass die Stabilität der Windstopeinrichtung nicht optimal ist.

Der Erfindung liegt daher die Aufgabe zugrunde, die Stabilität bei einer derartigen Windstopeinrichtung zu erhöhen.

Diese Aufgabe wird bei einer Windstopeinrichtung der eingangs beschriebenen Art erfindungsgemäß dadurch gelöst, dass mindestens eines der Gelenke in der entfalteten Stellung durch eine Blockiereinrichtung gegen ein Falten in die zusammengefaltete Stellung blockierbar ist.

Der Vorteil der erfindungsgemäßen Lösung ist somit darin zu sehen, dass Stabilität und insbesondere auch die Crash-Sicherheit bei einer derartigen Windstopeinrichtung erhöht werden können.

Vorzugsweise ist das durch die Blockiereinrichtung blockierbare Gelenk, so ausgebildet, dass dieses nur die entfaltete Stellung und die zusammengefaltete Stellung sowie eine Faltbewegung zwischen diesen Stellungen zulässt und gegen eine Bewegung darüber hinaus blockiert ist, beispielsweise durch entsprechende Anschlagkörper, so dass die Blockiereinrichtung nur ausgehend von der entfalteten Stellung die Faltbewegung in Richtung der zusammengefalteten Stellung blockieren muss.

Um ein Lösen der Blockierung des Gelenks durch Fehlverhalten von Personen oder Kraftspitzen zu verhindern, sieht eine besonders vorteilhafte Ausführungsform der erfindungsgemäßen Blockiereinrichtung dabei vor, dass diese so ausgebildet ist, dass die Blockierung des jeweiligen Gelenks nur durch aktive Betätigung eines Betätigungselements lösbar ist, wobei das Betätigungselement an dem jeweiligen Windschottrahmen bzw. Abdeckungsrahmen angeordnet ist.

Eine vorteilhafte Ausführungsform der erfindungsgemäßen Blockiereinrichtung sieht vor, dass die Blockiereinrichtung ein auf einer Seite der jeweiligen Schwenkachse angeordnetes erstes Blockierelement und ein auf der gegenüberliegenden Seite der jeweiligen Schwenkachse angeordnetes zweites Blockierelement aufweist und dass die die Blockierelemente in ihrer Blockierstellung formschlüssig ineinandergreifen.

Vorzugsweise ist die Blockiereinrichtung so ausgebildet, dass mindestens eines der Blockierelemente von einer Blockierstellung in eine Freigabestellung bewegbar ist.

Alternativ dazu ist die Blockiereinrichtung so ausgebildet, dass jedes der Blockierelemente von einer Blockierstellung in eine Freigabestellung bewegbar ist.

Besonders vorteilhaft ist es dabei, wenn die Blockierung des jeweiligen Gelenks bereits dann gelöst ist, wenn eines der Blockierelemente in der Freigabestellung steht.

Diese Lösung hat den großen Vorteil, dass dadurch die Betätigung der Blockiereinrichtung zum Lösen der Blockierung vereinfacht ist, da es ausreichend ist, wenn eines der Blockierelemente von der Blockierstellung in die Freigabestellung bewegt ist und nicht zwingend beide Blockierelemente in die Freigabestellung bewegt werden müssen.

Zweckmäßigerweise ist hierzu jedes der Blockierelemente in einer Blockierelementaufnahme zwischen der Blockierstellung und der Freigabestellung bewegbar gelagert.

Diese bewegbare Lagerung könnte beispielsweise eine schwenkbare Lagerung sein.

Eine besonders einfach in einen Windschott- oder Abdeckungsrahmen integrierbare Lösung sieht jedoch vor, dass das mindestens eine der Blockierelemente zwischen der Blockierstellung und der Freigabestellung verschiebbar ist, ohne dass eine Schwenkbewegung erfolgt.

Um die Blockierstellung eindeutig zu definieren, ist vorzugsweise vorgesehen, dass für das mindestens eine der Blockierelemente die Blockierstellung durch einen Anschlag der Blockierelementaufnahme vorgegeben ist.

Im Zusammenhang mit der bisherigen Erläuterung der einzelnen Ausführungsbeispiele wurde nicht näher darauf eingegangen, wie die Blockierelemente selbst ausgebildet sein sollen.

Eine vorteilhafte Ausführungsform sieht vor, dass jedes der Blockierelemente ein Formschlusselement aufweist, das komplementär zum anderen Formschlusselement ausgebildet ist, und dass in der Blockierstellung beider Blockierelemente die Formschlusselemente ineinandergreifen.

Unter komplementären Formschlusselementen sind dabei Formschlusselemente zu verstehen, die so geformt sind, dass eines der Formschlusselemente mit einem Bereich formschlüssig in einen an dessen Form angepassten Bereich des anderen Formschlusselements eingreifen kann oder jedes der Formschlusselemente einen Bereich aufweist, der mit einem entsprechend an dessen Form angepassten anderen Bereich des anderen Formschlusselements in Wirkverbindung treten kann.

Insbesondere ist dabei vorgesehen, dass die Formschlusselemente so ausgebildet sind, dass dann, wenn eines der Formschlusselemente in der Freigabestellung steht, die Formschlusselemente außer Eingriff sind und eine Blockierung des jeweiligen Gelenks gelöst ist.

Bei einer besonders vorteilhaften Lösung ist vorgesehen, dass mindestens eines der Formschlusselemente als Vorsprung ausgebildet ist, der in der Blockierstellung beider Formschlusselemente in das als Vorsprungaufnahme ausgebildete andere Formschlusselement eingreift.

Zweckmäßigerweise ist in diesem Fall vorgesehen, dass das die Vorsprungaufnahme aufweisende Blockierelement in der Lage ist, den Vorsprung in einer senkrecht zur jeweiligen Schwenkachse liegenden Bewegungsebene auf der Seite zu hintergreifen, welche die Blockierung eines Faltens von der entfalteten Stellung in die zusammengefaltete Stellung ermöglicht. Insbesondere ist vorgesehen, dass die Blockierelemente beim Übergang des jeweiligen Rahmens von der zusammengefalteten Stellung in die entfaltete Stellung in der entfalteten Stellung in ihrer Blockierstellung stehen und das jeweilige Gelenk blockieren.

Um zu erreichen, dass das mindestens eine Blockierelement sich selbsttätig in seine Blockierstellung bewegt, ist vorzugsweise vorgesehen, dass das mindestens eine der Blockierelemente durch einen Federkraftspeicher in Richtung seiner Blockierstellung beaufschlagt ist.

Im Falle zweier bewegbarer Blockierelemente ist jedes der Blockierelemente durch einen Federkraftspeicher in Richtung seiner Blockierstellung beaufschlagt.

Prinzipiell wäre es denkbar, die Blockierelementaufnahmen so anzuordnen, dass sie außerhalb der den Windschottrahmen oder den Abdeckungsrahmen bildenden Streben liegen.

Eine besonders günstige Lösung sieht vor, dass die Blockierelementaufnahmen an an das jeweilige Gelenk angrenzenden Enden von Streben des Windschottrahmens oder des Abdeckungsrahmens gehalten sind.

Besonders vorteilhaft ist es, wenn die Blockierelementaufnahmen in die Enden der an das Gelenk angrenzenden Streben integriert sind.

Ferner wurden zum Bewegen der Blockierelemente von der Blockierstellung in die Freigabestellung keine näheren Angaben gemacht.

So sieht eine günstige Lösung vor, dass die Blockierelemente mittels eines Betätigungselements von der Blockierstellung in die Freigabestellung bewegbar sind.

Beispielsweise ist dabei vorgesehen, dass die Betätigungselemente an dem jeweiligen Rahmen, das heißt an dem jeweiligen Windschottrahmen oder Abdeckungsrahmen, angeordnet sind.

Insbesondere sind die Betätigungselemente so angeordnet, dass sie in seitlichen Außenbereichen des Windschottrahmens oder des Abdeckungsrahmens und somit nahe bei einer Seitenwand der Fahrzeugkarosserie liegen, so dass sie für eine seitlich an der Fahrzeugkarosserie stehende Person leicht zugänglich sind.

Vorzugsweise erfolgt die Kopplung zwischen dem jeweiligen Betätigungselement und dem jeweiligen Blockierelement durch ein Zugelement, welches das Betätigungselement mit dem Blockierelement verbindet.

Insbesondere ist hierbei vorgesehen, dass das Zugelement von dem jeweiligen Blockierelement zum Betätigungselement in dem jeweiligen Rahmen verläuft.

Bei einer Lösung ist vorgesehen, dass jedes Blockierelement über ein Zugelement mit dem entsprechenden Betätigungselement gekoppelt ist.

Eine andere vorteilhafte Lösung sieht vor, dass ein einziges Zugelement von einem Betätigungselement zum anderen Betätigungselement quer zur jeweiligen Gelenkachse über das jeweilige Gelenk hinweg verläuft und dass das Zugelement mindestens einen Zugkörper aufweist, welcher bei Betätigung nur eines der Betätigungselemente und Bewegen des Zugelements eines der Blockierelemente von der Blockierstellung in die Freigabestellung bewegt. Eine vorteilhafte Ausführungsform der Windstopeinrichtung sieht vor, dass der Windschottrahmen und der Abdeckungsrahmen um die Schwenkachse derart gegeneinander verschwenkbar sind, dass in einer abgeklappten Stellung des Windschottrahmens der eine der Rahmen in der Rahmenöffnung des anderen der Rahmen liegt.

Der Vorteil dieser Lösung ist darin zu sehen, dass damit bereits bei abgeklappter Stellung des Windschottrahmens eine raumsparende Anordnung des Windschottrahmens relativ zum Abdeckungsrahmen besteht, so dass bei nachfolgender Faltung des Windschottrahmens und des Abdeckungsrahmens ebenfalls der Raumbedarf für die zusammengefaltete Windstopeinrichtung gering ist.

Besonders günstig ist es, wenn in der abgeklappten Stellung des Windschottrahmens eine Bauhöhe der Windstopeinrichtung der Rahmenbreite des Rahmens mit der größten Rahmenbreite entspricht.

Besonders günstig ist es hierbei, wenn die Rahmenbreite des Windschottrahmens und des Abdeckungsrahmens ungefähr gleich groß ist.

Im Zusammenhang mit den bislang beschriebenen Lösungen wurde davon ausgegangen, dass der Windschottrahmen um die Windschottfaltachse und der Abdeckungsrahmen um die Abdeckungsfaltachse faltbar sind, wobei die Faltungsrichtung offen gelassen wurde.

Prinzipiell ist es denkbar, den Windschottrahmen und den Abdeckungsrahmen in unterschiedlichen Faltrichtungen zu falten.

Besonders wenig Bauraum ist bei einer erfindungsgemäßen Windstopeinrichtung vonnöten, wenn ausgehend von der abgeklappten Stellung des Windschottrahmens der Windschottrahmen und der Abdeckungsrahmen in derselben Faltrichtung faltbar sind, so dass die zusammengefaltete Windstopeinrichtung dann eine Bauhöhe aufweist, die beispielsweise der doppelten Bauhöhe in der abgeklappten Stellung des Windschottrahmens entsprechen kann.

Die Faltung des Windschottrahmens und des Abdeckungsrahmens lässt sich insbesondere dann optimal durchführen, wenn die Windschottfaltachse und die Abdeckungsfaltachse in der abgeklappten Stellung des Windschottrahmens im Wesentlichen miteinander zusammenfallend angeordnet sind, so dass nämlich sowohl der Windschottrahmen als auch der Abdeckungsrahmen im Wesentlichen um dieselbe Faltachse gefaltet werden können.

Hinsichtlich der relativen Lage des Windschottrahmens und des Abdeckungsrahmens in der abgeklappten Stellung des Windschottrahmens wurden bislang keine näheren Angaben gemacht.

So ist es für das Falten der Windstopeinrichtung besonders günstig, wenn in der abgeklappten Stellung des Windschottrahmens eine Mittelebene des einen der Rahmen ungefähr parallel zur Mittelebene des anderen der Rahmen liegt.

Besonders günstig ist es dabei, wenn in der abgeklappten Stellung des Windschottrahmens die Mittelebenen des Windschottrahmens und des Abdeckungsrahmens näherungsweise zusammenfallend angeordnet sind.

Besonders günstig für das Falten des Windschotts ist es, wenn die Windschottfaltachse in einer Ebene liegt, die an die Windschottfaltachse angrenzende Enden der Querstreben des Windschottrahmens nicht schneidet.

Ferner ist es für das Falten des Abdeckungsrahmens günstig, wenn die Abdeckungsfaltachse in einer Ebene liegt, die an die Abdeckungsfaltachse angrenzende Enden der Querstreben des Abdeckungsrahmens nicht schneidet.

In beiden Fällen besteht dadurch die Möglichkeit, dass die jeweils an die Windschottfaltachse bzw. Abdeckungsfaltachse angrenzenden Enden der Streben in der gefalteten Stellung aufeinander liegend oder in geringem Abstand voneinander angeordnet werden können, so dass dadurch eine Faltung um im Wesentlichen 180° sowohl des Windschottrahmens bzw. des Abdeckungsrahmens möglich ist.

Hinsichtlich des Verlaufs des strömungshindernden Elements relativ zum Windschottrahmen wurden bislang keine näheren Angaben gemacht. So sieht eine vorteilhafte Lösung vor, dass in der abgeklappten Stellung des Windschottrahmens sich das strömungshindernde Element des Windschotts in einer den Windschottrahmen auf einer Seite tangierenden Fläche erstreckt.

Ferner ist bezüglich der relativen Anordnung des strömungshindernden Elements und der Windschottfaltachse vorgesehen, dass bei einer zweckmäßigen Ausführungsform in der abgeklappten Stellung des Windschottrahmens die Windschottfaltachse im Wesentlichen in der Fläche verläuft, in welcher sich das strömungshindernde Element des Windschotts erstreckt.

Ferner wurden auch keine näheren Angaben zur relativen Anordnung des strömungshindernden Elements der Abdeckung relativ zum Abdeckungsrahmen gemacht. Eine zweckmäßige Lösung sieht dabei vor, dass in der abgeklappten Stellung des Windschottrahmens sich das strömungshindernde Element der Abdeckung in einer den Abdeckungsrahmen auf einer Seite tangierenden Fläche erstreckt.

Ferner sieht eine zweckmäßige relative Anordnung der Abdeckungsfaltachse und des strömungshindernden Elements vor, dass in der abgeklappten Stellung des Windschottrahmens die Abdeckungsfaltachse im Wesentlichen in einer Fläche verläuft, in welcher sich das strömungshindernde Element der Abdeckung erstreckt.

Besonders günstig lässt sich bei der erfindungsgemäßen Windschotteinrichtung ein Falten um die Windschottfaltachse und die Abdeckungsfaltachse durchführen, wenn in der abgeklappten Stellung des Windschottrahmens das strömungshindernde Element des Windschotts und das strömungshindernde Element der Abdeckung im Wesentlichen aneinander anliegen.

Hinsichtlich der Ausbildung des Windschottrahmens wurden im Zusammenhang mit der bisherigen Erläuterung der einzelnen Ausführungsbeispiele keine näheren Angaben gemacht.

So sieht eine vorteilhafte Lösung vor, dass der Windschottrahmen als eine Rahmenöffnung ungefähr U-förmig umschließend ausgebildet ist.

Eine alternative Lösung sieht vor, dass der Windschottrahmen als um eine Rahmenöffnung herum geschlossen verlaufend ausgebildet ist.

Hinsichtlich der Ausbildung des Abdeckungsrahmens ist vorzugsweise vorgesehen, dass der Abdeckungsrahmen als eine Rahmenöffnung ungefähr U-förmig umschließend ausgebildet ist.

Die relative Anordnung der strömungshindernden Elemente des Windschotts und der Abdeckung kann in unterschiedlichster Art und Weise erfolgen.

Eine einfache Ausführungsform sieht vor, dass das strömungshindernde Element der Abdeckung separat vom strömungshindernden Element des Windschotts ausgebildet und angeordnet ist.

Eine zweckmäßige Lösung sieht jedoch vor, dass das strömungshindernde Element des Windschotts in das strömungshindernde Element der Abdeckung übergeht.

Im Fall eines Windschottrahmens der geschlossen um die Rahmenöffnung herum verläuft, ist dabei das strömungshindernde Element an den unteren Streben fixiert.

Eine weitere vorteilhafte Ausführungsform sieht vor, dass das strömungshindernde Element des Windschotts und das strömungshindernde Element der Abdeckung in einem zwischen oberen Querstreben des Windschottrahmens und hinteren Querstreben des Abdeckungsrahmens liegenden Übergangsbereich unmittelbar ineinander übergehen.

Besonders günstig ist es bei der erfindungsgemäßen Lösung, wenn das jeweilige strömungshindernde Element aus einem elastischen Material ausgebildet ist.

Im Zusammenhang mit der erfindungsgemäßen Windstopeinrichtung wurden noch keine Ausführungen zur Positionierung des Windschotts relativ zur Abdeckung gemacht.

Eine vorteilhafte Lösung der Windstopeinrichtung sieht dabei vor, dass das Windschott durch eine Positioniereinrichtung in einer hochgeklappten aktiven Stellung und einer abgeklappten inaktiven Stellung stabil positionierbar ist. Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine perspektivische Ansicht eines ersten Ausführungsbeispiel einer erfindungsgemäßen Windstopeinrichtung, montiert an einer bereichsweise dargestellten Fahrzeugkarosserie;
- Fig. 2: eine perspektivische und vergrößerte Darstellung des ersten Ausführungsbeispiels der erfindungsgemäßen Windstopeinrichtung bei hochgeklapptem, in aktiver Stellung stehendem Windschott;
- Fig. 3: eine Darstellung ähnlich Fig. 2 bei abgeklapptem, in inaktiver Stellung stehendem Windschott;
- Fig. 4: eine perspektivische Darstellung des ersten Ausführungsbeispiels der erfindungsgemäßen Windstopeinrichtung in gefalteter Stellung von Windschott und Abdeckung;
- Fig. 5: einen Schnitt längs Linie 5-5 in Fig. 2 durch ein Gelenk eines Windschottrahmens mit einem ersten Ausführungsbeispiel einer Blockiereinrichtung mit in ihren Blockierstellungen stehenden Blockierelementen;
- Fig. 6: einen Schnitt längs Linie 6-6 in Fig. 2 durch das Gelenk mit dem ersten Ausführungsbeispiel der Blockiereinrichtung mit in ihren Blockierstellungen stehenden Blockierelementen;
- Fig. 7: einen Schnitt entsprechend Fig. 6 mit einem ersten Blockierelement in Freigabestellung und einem zweiten Blockierelement in Blockierstellung;
- Fig. 8: einen Schnitt entsprechend Fig. 6 mit einem zweiten Blockierelement in Freigabestellung und einen ersten Blockierelement in Blockierstellung;
- Fig. 9: einen Schnitt ähnlich Fig. 6 bei angewinkeltem Gelenk in einer Stellung in welcher sich die in Blockierstellung stehenden Blockierelemente berühren;
- Fig. 10: einen Schnitt ähnlich Fig. 9 mit relativ zu Fig. 9 stärker gestrecktem Gelenk und Verschiebung des zweiten Blockierelements aus der Blockierstellung in Richtung seiner Freigabestellung durch das erste Blockierelement;
- Fig. 11: einen Schnitt ähnlich Fig. 10 mit relativ zu Fig. 10 noch stärker gestrecktem Gelenk;
- Fig. 12: eine schematische Darstellung von Betätigungsmöglichkeiten der Blockiereinrichtung gemäß dem ersten Ausführungsbeispiel;
- Fig. 13: einen Schnitt ähnlich Fig. 5 durch ein Gelenk mit einem zweiten Ausführungsbeispiel einer Blockiereinrichtung und
- Fig. 14: eine schematische Darstellung von Betätigungsmöglichkeiten der Blockiereinrichtung gemäß dem zweiten Ausführungsbeispiel.

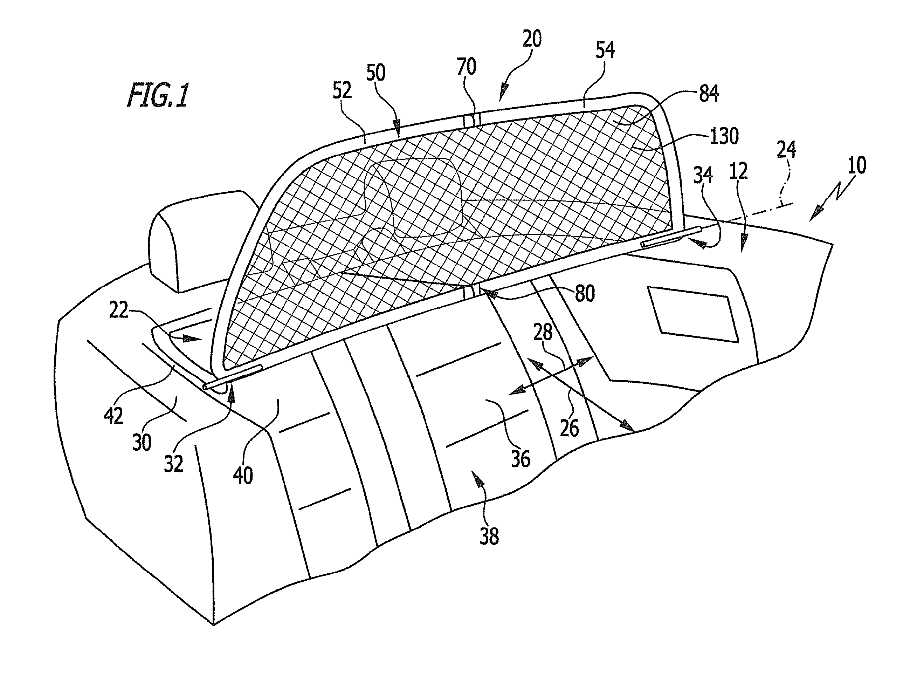

Ein erstes Ausführungsbeispiel einer erfindungsgemäßen Windstopeinrichtung 10 für ein Cabrio-Fahrzeug, dargestellt in Fig. 1 in einem an einer Fahrzeugkarosserie 12 montierten Zustand, umfasst ein Windschott 20 und eine Abdeckung 22, die schwenkbar um eine Schwenkachse 24 miteinander verbunden sind, wobei die Schwenkachse 24 parallel zu einer quer zur Fahrzeuglängsachse 26 verlaufenden Fahrzeugquerachse 28 ausgerichtet ist.

Im an der Fahrzeugkarosserie 12 montierten Zustand liegt die Abdeckung 22 in Höhe einer Gürtellinie 30 der Fahrzeugkarosserie 12 an dieser an und ist dabei mit der Fahrzeugkarosserie 12 über Fixiereinrichtungen 32 und 34 verbunden, wobei die Abdeckung 22 einen hinteren Bereich 36 eines Fahrgastraums überdeckt, der beispielsweise durch eine hintere Sitzanlage 38 der Fahrzeugkarosserie 12 begrenzt ist und vor dieser liegt.

Vorzugsweise grenzt die Abdeckung 22 an Rücksitzlehnen 40 der hinteren Sitzanlage 38 an oder überdeckt diese noch, so dass die Abdeckung 22 im Wesentlichen einen in Höhe der Gürtellinie 30 liegenden hinteren Bereich 42 einer Karosserieöffnung des Cabrio-Fahrzeugs im Wesentlichen verschließt.

Die Schwenkachse 24 ist dabei auf einer einer zeichnerisch nicht dargestellten vorderen Sitzreihe zugewandten Seite der Abdeckung 22 angeordnet, so dass das Windschott 20 in seiner hochgeklappten aktiven Stellung im Wesentlichen hinter Sitzlehnen und Kopfstützen einer vorderen Sitzreihe steht.

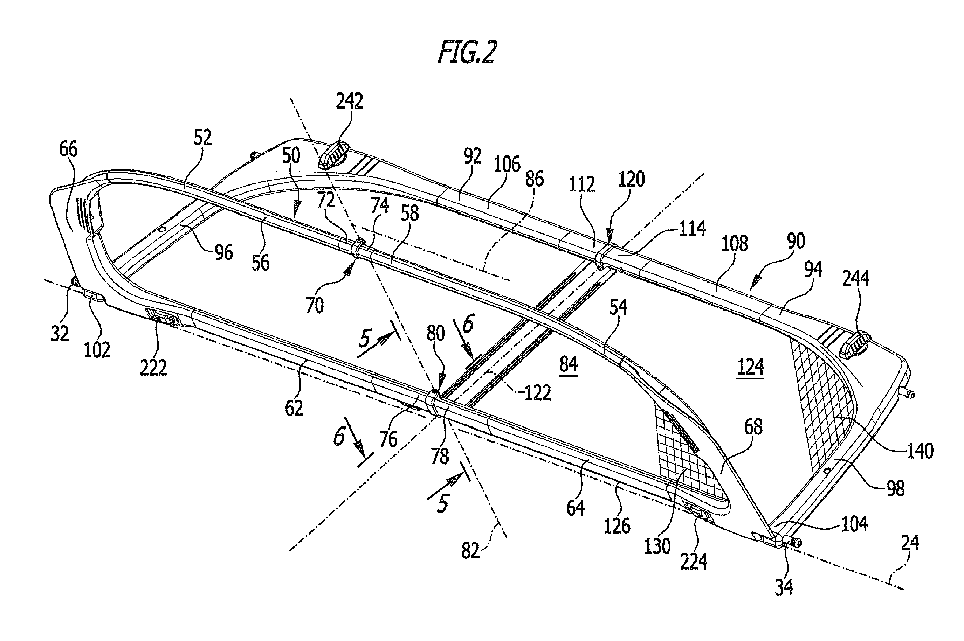

Wie in Fig. 1 und noch vergrößert dargestellt in Fig. 2, umfasst das Windschott 20 einen Windschottrahmen 50, welcher aus zwei Rahmenhälften 52 und 54 gebildet ist, die jeweils ungefähr C-förmig ausgeführt sind und jeweils obere Querstreben 56 und 58 sowie untere Querstreben 62 und 64 aufweisen, die durch seitliche Streben 66 und 68 miteinander verbunden sind. Die oberen Querstreben 56 und 58 sind im Bereich ihrer den seitlichen Querstreben 66 und 68 abgewandten freien Enden 72 und 74 mittels eines Gelenks 70 verbunden und die unteren Querstreben 62 und 64 sind im Bereich ihrer freien, den seitlichen Streben 66 und 68 abgewandten Enden 76 und 78 mit einem Gelenk 80 verbunden, wobei die beiden Gelenke 70 und 80 eine Windschottfaltachse 82 festlegen, längs welcher die Rahmenhälften 52 und 54 von einer in Fig. 1 bis 3 dargestellten ausgebreiteten Stellung in eine gefaltete Stellung zusammenfaltbar sind, wie nachstehend noch im Einzelnen beschrieben.

Bei nicht gefalteter Stellung des Windschottrahmens 50 umschließt dieser eine Rahmenöffnung 84.

Außerdem umfasst die Abdeckung 22 einen im Wesentlichen C-förmigen Abdeckungsrahmen 90, der aus zwei Rahmenbügeln 92 und 94 gebildet ist, welche jeweils Seitenstreben 96 und 98 aufweisen, die jeweils von Lagerkörpern 102 und 104 für die schwenkbare Lagerung des Windschotts 20 um die Achse 24 ausgehend sich zu hinteren Querstreben 106 und 108 erstrecken, welche mit einander zugewandten Enden 112 und 114 durch ein Gelenk 120 verbunden sind, das eine Abdeckungsfaltachse 122 definiert, um welche die Rahmenbügel 92 und 94 des Abdeckungsrahmens 90 wie nachfolgend noch im Einzelnen beschrieben, von der in Fig. 1 bis 3 dargestellten ausgebreiteten Stellung in eine gefaltete Stellung bringbar sind.

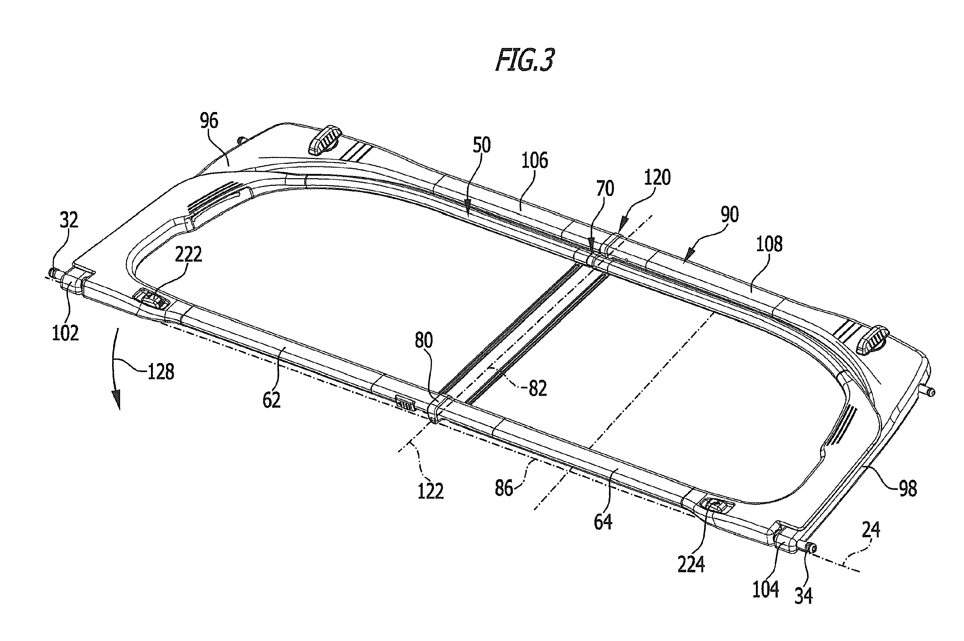

Bei der erfindungsgemäßen Windstopeinrichtung 10 ist das Windschott 20 von einer in Fig. 1 und 2 dargestellten hochgeklappten aktiven Stellung um die Schwenkachse 24 in eine in Fig. 3 dargestellte inaktive oder abgeklappte Stellung verschwenkbar, wobei, wie in Fig. 3 dargestellt, der Windschottrahmen 50 so ausgebildet ist, dass dieser mit seinem die unteren Querstreben 62, 64 umfassenden unteren Bereich zwischen den Lagerkörpern 102 und 104 angeordnet ist und somit der gesamte Windschottrahmen 50 in der in Fig. 3 dargestellten abgeklappten und inaktiven Stellung zwischen den Seitenstreben 96 und 98 sowie den hinteren Querstreben 106 und 108 des Abdeckungsrahmens 90 mit seinen seitlichen Streben 66 und 68 und seinen oberen Querstreben 56 und 58 liegt.

Damit liegt der Windschottrahmen 50 im Wesentlichen innerhalb einer vom Abdeckungsrahmen 90 mit den Seitenstreben 96 und 98 sowie den hinteren Querstreben 106 und 108 begrenzten und bis zur Schwenkachse 24 reichenden Rahmenöffnung 124.

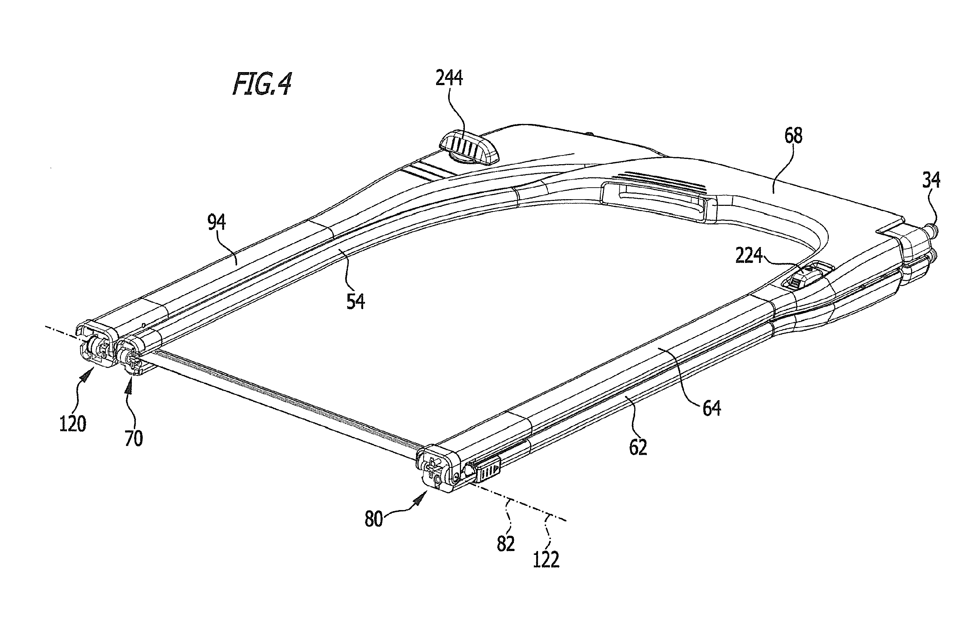

Vorzugsweise sind die Gelenke 70 und 80 sowie das Gelenk 120 so angeordnet, dass in der in Fig. 3 dargestellten abgeklappten Stellung des Windschottrahmens 50 die Windschottfaltachse 82 sowie die Abdeckungsfaltachse 122 im Wesentlichen miteinander zusammenfallen, so dass eine gleichsinnige Faltung, eine Faltung sowohl des Windschotts 20 als auch der Abdeckung 22 um die gemeinsame Windschottfaltachse 82 sowie die Abdeckungsfaltachse 122 in einer Faltungsrichtung 128 zum Erreichen der in Fig. 4 dargestellten gefalteten Stellung möglich ist, bei welcher der Lagerkörper 102 unter dem Lagerkörper 104 liegt, die untere Querstrebe 62 unter der unteren Querstrebe 64 liegt, die obere Querstrebe 56 unter der oberen Querstrebe 58 liegt und die hintere Querstrebe 106 unter der hinteren Querstrebe 108 liegt.

Das heißt, dass bei Faltung um die miteinander zusammenfallenden Windschottfaltachse 82 und die Abdeckungsfaltachse 122 die Rahmenhälfte 52 des Windschottrahmens auf einer Seite der Rahmenhälfte 54 und der Rahmenbügel 92 des Abdeckungsrahmens 90 auf derselben Seite des Rahmenbügels 94 des Abdeckungsrahmens 90 liegen.

Bei symmetrischer Ausbildung der Rahmenhälften 52 und 54 bezüglich der Windschottfaltachse 82 und der Rahmenbügel 92 und 94 zur Abdeckungsfaltachse 122 liegen die Seitenstrebe 98 und die Seitenstrebe 96 sowie die seitliche Strebe 68 und die seitliche Strebe 66 jeweils übereinander.

In diesem Fall ist eine optimal kompakte Faltung der Windstopeinrichtung gegeben, bei welcher in der gefalteten Stellung die Bauhöhe das doppelte der Bauhöhe der Windstopeinrichtung 10 bei abgeklappter Stellung des Windschottrahmens 50 beträgt.

Voraussetzung dafür, dass eine derart optimal kompakte Faltung möglich ist, ist, dass die Windschottfaltachse 82, wie beispielsweise in Fig. 3 dargestellt, in einer Ebene 86 liegt, die die Enden 72 und 74 der oberen Querstreben 56 und 58 sowie die Enden 76 und 78 der unteren Querstreben 62 und 64 auf einer Seite tangiert, oder berührt, jedoch nicht schneidet, so dass die Enden 72 und 74 sowie 76 und 78 beim Falten um die Windschottfaltachse 82 sich ungefähr parallel zueinander erstrecken und in geringem Abstand voneinander verlaufen oder aneinander anliegen.

In gleicher Weise ist auch die Abdeckungsfaltachse 122 so angeordnet, dass diese in einer Ebene 126 liegt, die ebenfalls die Enden 112 und 114 der hinteren Querstreben 106 und 108 nicht schneidet, sondern nur seitlich berührt, so dass auch beim Falten der hinteren Querstreben 106 und 108 um die Abdeckungsfaltachse 122 diese ungefähr parallel zueinander ausgerichtet werden können, wobei die Enden 112 und 114 sich berühren oder in geringem Abstand voneinander verlaufen.

Bei dem in den Fig. 1 bis 4 dargestellten ersten Ausführungsbeispiel der erfindungsgemäßen Windstopeinrichtung ist die Rahmenöffnung 84 des Windschottrahmens 50 durch ein strömungshinderndes Element 130 verschlossen, welches ungefähr in der Ebene 86 liegt und somit berührend an dem Windschottrahmen 50 auf einer der Abdeckung 90 zugewandten Seite anliegt.

Ferner ist auch der Abdeckungsrahmen 90 durch ein strömungshinderndes Element 140 verschlossen, das an dem Abdeckungsrahmen 90 auf einer der Fahrzeugkarosserie 12 zugewandten Seite anliegt und sich somit im Bereich der Abdeckungsklappachse 122 in der Ebene 126 erstreckt.

Damit liegen in der in Fig. 3 dargestellten abgeklappten Stellung des Windschottrahmens 50 die strömungshindernden Elemente 130 und 140 im Wesentlichen unmittelbar aufeinander auf und dadurch, dass sich diese in den Ebenen 86 bzw. 126 erstrecken, liegen auch die Windschottfaltachse 82 und die Abdeckungsfaltachse 122 in der Fläche, in der sich das jeweilige strömungshindernde Element 130 bzw. 140 erstreckt, so dass ein Falten sowohl des Windschottrahmens 50 als auch des Abdeckungsrahmens 90 ohne zusätzliche Zugeinwirkung auf das strömungshindernde Element 130 bzw. 140 möglich ist.

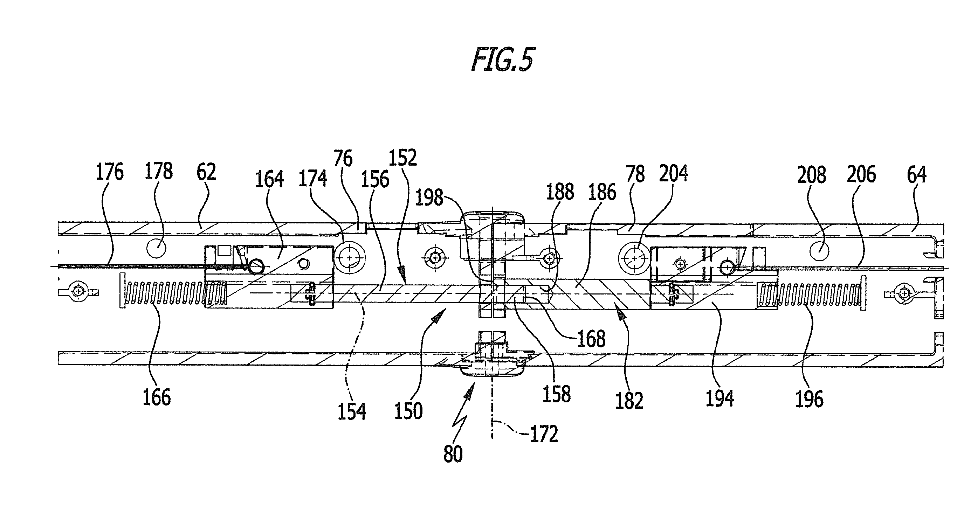

Ein erstes, in Fig. 5 bis 11 dargestelltes Ausführungsbeispiel eines erfindungsgemäßen Gelenks, in diesem Fall beispielhaft des Gelenks 80, welches insbesondere so ausgebildet ist, dass es lediglich ein Schwenken um die jeweilige Achse zum Falten des Windschottrahmens 50 und/oder des Abdeckungsrahmens 90 zwischen der entfalteten Stellung und der zusammengefalteten Stellung zulässt, umfasst eine als Ganzes mit 150 bezeichnete Blockiereinrichtung, welche dazu dient, eine Schwenkbewegung um die Windschottfaltachse 82, insbesondere in Richtung eines Faltens von der entfalteten Stellung in die zusammengefaltete Stellung, zu verhindern.

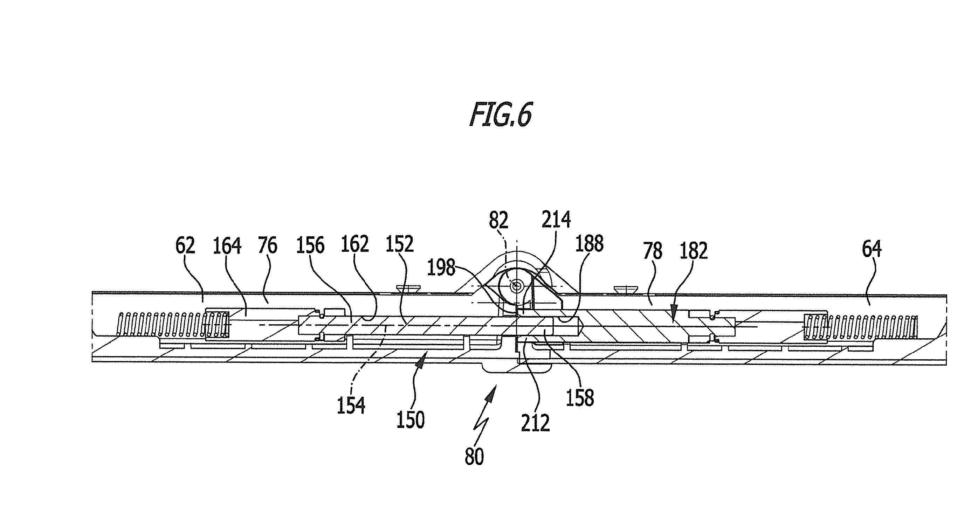

Die Blockiereinrichtung 150 umfasst dabei, wie in Fig. 5 und 6 dargestellt, ein im Ende 76 der Querstrebe 62 angeordnetes erstes Blockierelement 152, welches in dem Ende 76 der Querstrebe 62 parallel zu einer Mittelachse 154 des Endes 76 verschiebbar gelagert ist und einen Führungskörper 156 aufweist, an welchem als Formschlusselement ein Vorsprung 158 angeformt ist, der beispielsweise die Form einer Zunge oder, wie im dargestellten Ausführungsbeispiel die Form eines zylindrischen Fortsatzes, aufweist.

Auch der Führungskörper 156 ist vorzugsweise als zylindrischer Stift ausgebildet und in einer einen Führungskanal umfassenden Blockierelementaufnahme 162 des Endes 76 in Richtung parallel zur Mittelachse 154 verschiebbar geführt.

Der Führungskörper 156 ist seinerseits mit einem Mitnehmer 164 fest verbunden, der ein dem Vorsprung 158 gegenüberliegendes Ende des Führungskörpers 156 fixierend aufnimmt.

Wie insbesondere in Fig. 5 dargestellt, wirkt auf den Mitnehmer 164 ein Federkraftspeicher 166, welcher den Mitnehmer 164 mitsamt dem ersten Blockierelement 152 in Richtung des gegenüberliegenden Endes 78 beaufschlagt, so dass das erste Blockierelement 152 in seiner, in Fig. 5 und 6 dargestellten Blockierstellung mit dem als Vorsprung ausgebildeten ersten Formschlusselement 158 eine Trennebene 172 zwischen den Enden 76 und 78 bei gestrecktem Gelenk 80 durchgreift und in das Ende 78 der Querstrebe 64 hineinragt, so dass eine Stirnseite 168 des Vorsprungs 158 in dem Ende 78 angeordnet ist.

Die Blockierstellung des ersten Blockierelements 152 wird dabei vorgegeben durch einen Anschlag 174, an welchem der Mitnehmer 164 in der Blockierstellung anliegt und durch den Federkraftspeicher 166 in der Blockierstellung in Anlage gehalten wird.

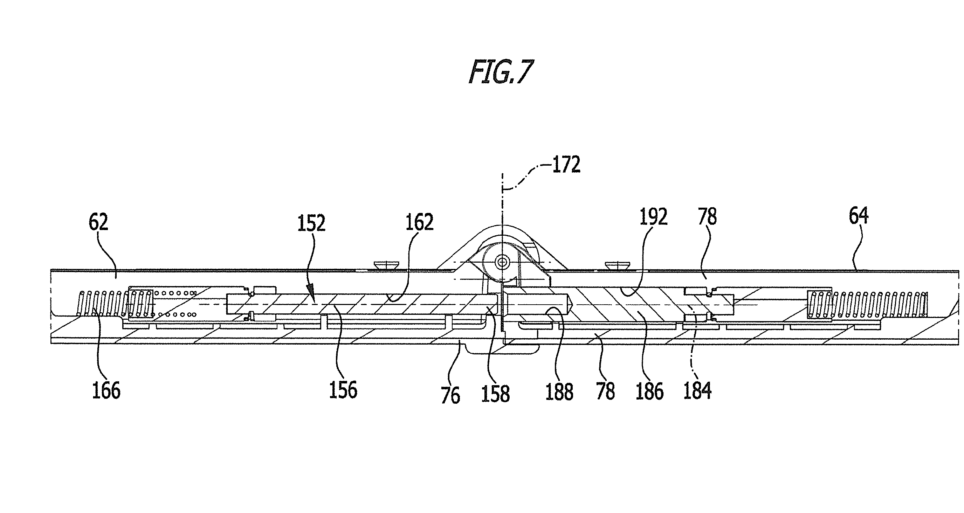

Zum Bewegen des ersten Blockierelements 152 aus der in Fig. 5 und 6 dargestellten Blockierstellung heraus, ist der Mitnehmer 164 mit einem Zugelement 176 verbunden, welches wie nachfolgend noch im Einzelnen beschrieben, betätigbar ist, um das erste Blockierelement 152 in seine Freigabestellung zu bewegen, in welcher dieses, wie in Fig. 7 dargestellt, mit dem ersten Formschlusselement 158 nicht mehr die Trennebene 172 durchgreift, sondern maximal die Trennebene 172 berührt oder in einem geringen Abstand von dieser auf Seiten des Endes 76 der Querstrebe 62 angeordnet ist. Dabei lässt sich beispielsweise die Freigabestellung des ersten Blockierelements 152 ebenfalls durch einen Anschlag 178, welcher der Einfachheit halber ebenfalls auf den Mitnehmer 164 wirkt, festlegen.

Die Blockiereinrichtung 150 umfasst ferner ein als Ganzes mit 182 bezeichnetes zweites Blockierelement, welches in dem Ende 78 der Querstrebe 64 parallel zu einer Mittelachse 184 bewegbar geführt ist und einen Führungskörper 186 aufweist, welcher als Formschlusselement nicht mit einem Vorsprung versehen ist sondern mit einer dem Ende 76 zugewandten Ausnehmung 188, die in einer quer zur Mittelachse 184 verlaufenden Ebene entweder einen rechteckigen oder im Falle eines stiftförmigen Vorsprungs 158 einen runden Querschnitt aufweisen kann.

Zur bewegbaren Lagerung des Führungskörpers 186 in dem Ende 78 ist in diesem eine einen Führungskanal umfassende Blockierelementaufnahme 192 vorgesehen.

Ferner ist auch, wie insbesondere in Fig. 5 dargestellt, das zweite Blockierelement 182 im Bereich seines der Ausnehmung 188 gegenüberliegenden Endes an einem Mitnehmer 194 fixiert, auf welchen ein Federkraftspeicher 196 einwirkt, derart, dass das zweite Blockierelement 182 aufgrund der Einwirkung des Federkraftspeichers 196 in seiner Blockierstellung gehalten wird.

Das zweite Blockierelement 182 grenzt dabei in der Blockierstellung mit seiner Stirnseite 198 an die Trennebene 172 an oder ist in einem geringfügigen Abstand von der Trennebene 172 innerhalb des Endes 78 angeordnet, durchgreift jedoch die Trennebene 172 vorzugsweise nicht.

Zur Festlegung der Blockierstellung des zweiten Blockierelements 182 ist im Ende 78 ebenfalls ein Anschlag 204 vorgesehen.

Ferner ist das zweite Blockierelement 182 ebenfalls durch ein Zugelement 206 entgegen der Kraftwirkung des Federkraftspeichers 196 beaufschlagbar, so dass das zweite Blockierelement 182 in eine Freigabestellung bewegbar ist, die durch einen Anschlag 208 ebenfalls festgelegt ist, wobei der Anschlag 208 auf den Mitnehmer 194 wirkt.

Die Freigabestellung ist dabei so gewählt, dass die Stirnseite 198 des zweiten Blockierelements, von welcher ausgehend sich die Ausnehmung 188 in dieses hinein erstreckt, so weit von der Trennebene 172 wegbewegbar ist, dass das erste Formschlusselement 158 nicht mehr in das zweite Formschlusselement 188 eingreift, sondern die Stirnseite 168 des Vorsprungs 158 außerhalb der das zweite Formschlusselement bildenden Ausnehmung 188 steht.

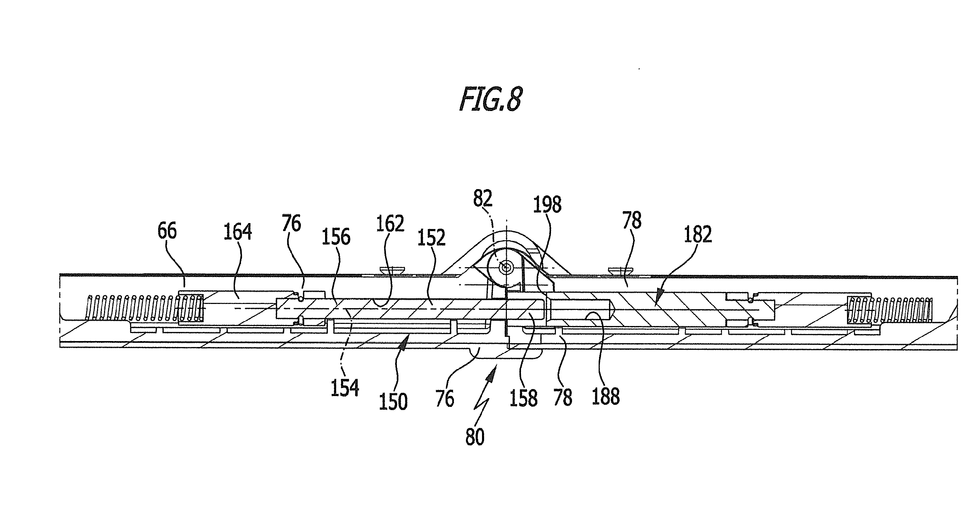

Diese Stellung des zweiten Blockierelements 182 ist beispielsweise in Fig. 8 dargestellt.

Insbesondere ist die erfindungsgemäße Ausnehmung 188 im zweiten Blockierelement 182 so ausgebildet, dass diese in einer senkrecht zur Windschottfaltachse 82 verlaufenden und die Ausnehmung 188 schneidenden Ebene betrachtet beiderseits der Ausnehmung 188 Wandbereiche 212 und 214 aufweist, die den Vorsprung 158 zwischen sich aufnehmen und fixieren, so dass der Vorsprung 158 beim Eingriff in die Ausnehmung 188 die beiden Blockierelemente 152 und 182 in einer definierten, beispielsweise miteinander fluchtenden Ausrichtung hält und folglich die ineinandergreifenden Blockierelemente 152 und 182 ein Schwenken der Enden 76 und 78 um die Windschottfaltachse 82 blockieren, da jedes der Blockierelemente 152 und 182 in dem entsprechenden Führungskanal 162 bzw. 192 des jeweiligen Endes 76, 78 geführt ist.

Wird jedoch eines der Blockierelemente 152, 182 in seine Freigabestellung bewegt, so besteht dadurch die Möglichkeit, die Enden 76 und 78 relativ zur Windschottfaltachse 82 gegeneinander zu verschwenken und somit beispielsweise das Windschott 20 um die Windschottfaltachse 82 zu falten, beispielsweise, wenn die Windschottfaltachse 82 mit der Abdeckungsfaltachse 122 zusammenfällt, wie eingangs beschrieben.

Sind dabei die Enden 76 und 78 so weit um die Windschottfaltachse 82 verschwenkt, dass der Vorsprung 158 nicht mehr in die Ausnehmung 188 eingreifen kann, so lassen sich die Enden 76 und 78 frei so weit verschwenken, bis beispielsweise die in Fig. 4 dargestellte gefaltete Stellung erreicht ist.

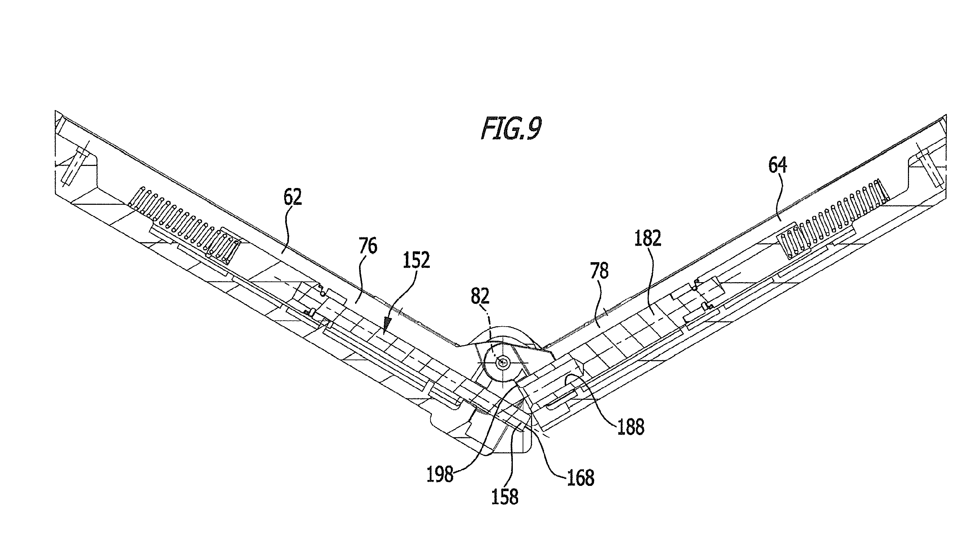

Erfolgt wieder ein Entfalten des Windschotts 20 durch Verschwenken der Enden 76 und 78 so, dass die Querstreben 62 und 64 in Richtung einer miteinander fluchtenden Stellung bewegt werden, so ist eine Betätigung der Blockierelemente 152 und 182 nicht notwendig, wie sich aus der Sequenz der Abbildung gemäß den Fig. 9, 10 und 11 ergibt.

Sobald keine Betätigung mehr erfolgt, stehen die Blockierelemente 152 und 182 in ihrer Blockierstellung, allerdings ohne ineinander einzugreifen, wie in Fig. 9 dargestellt.

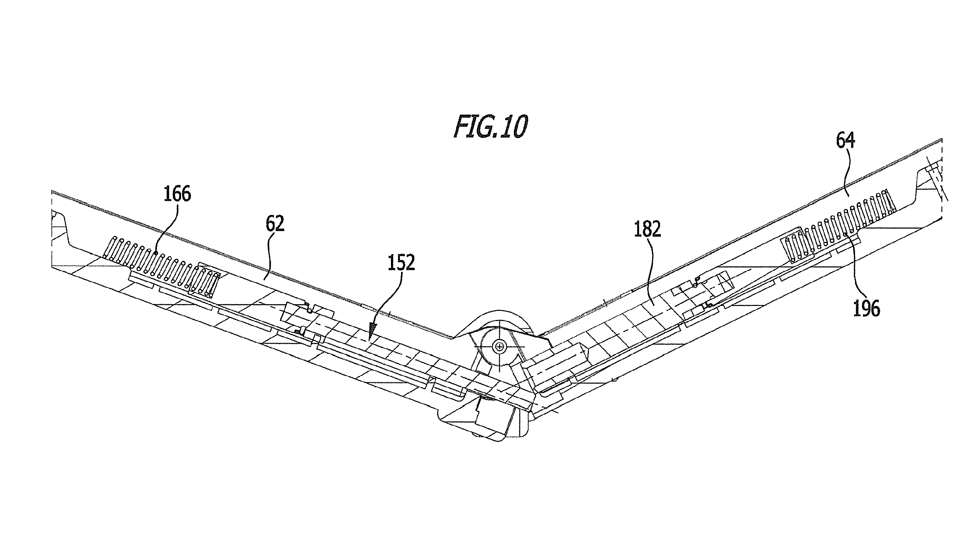

Bei einem zunehmenden Verschwenken der Enden 76 und 78 um die Schwenkachse 82 in Richtung einer miteinander fluchtenden Stellung der Streben 66 und 68 bewegen sich die Formschlusselemente 158 und 188, nämlich der Vorsprung 158 und die Ausnehmung 188 aufeinander zu, wobei zunächst, wie in Fig. 10 dargestellt, die Stirnseite 168 des Vorsprungs 158 die Stirnseite 198 des zweiten Blockierelements 182 an einem Außenbereich berührt.

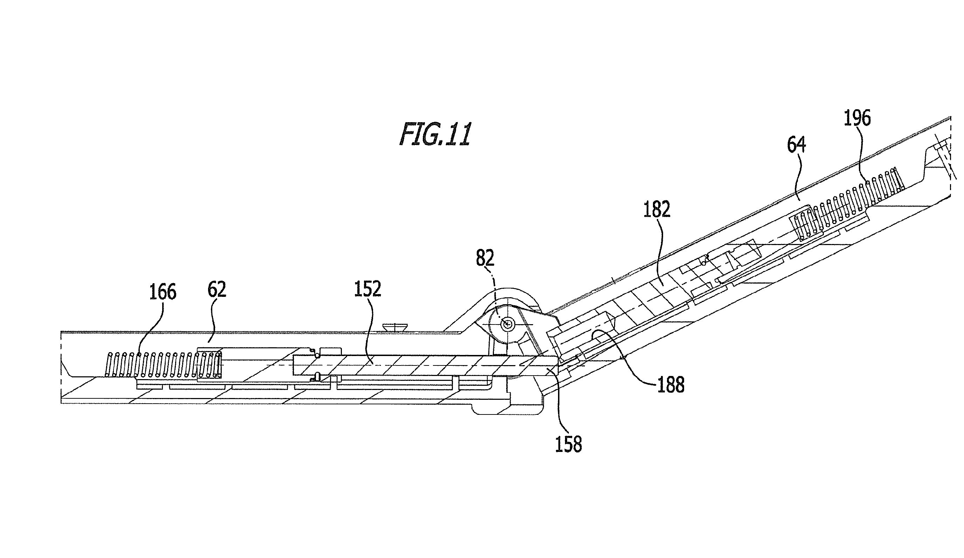

Bei einem weiteren Verschwenken wirken die Stirnseiten 168 und 198 gegeneinander und führen dazu, dass entweder das erste Blockierelement 152 gegen die Kraft des Federkraftspeichers 166 oder das zweite Blockierelement 182 gegen die Kraft des Federkraftspeichers 196 oder beide Blockierelemente 152 und 182 gegen die Kraft ihrer Federkraftspeicher 166 und 196 voneinander weg verschoben werden, wobei in Fig. 10 und Fig. 11 beispielhaft eine Verschiebung des zweiten Blockierelements 182 entgegen des Federkraftspeichers 196 dargestellt ist.

Diese Verschiebung erfolgt solange, bis der Vorsprung 158 die Möglichkeit hat in die Aufnahme 188 einzutauchen, so dass die Formschlusselemente 158 und 188 wieder miteinander in Eingriff kommen und beide Blockierelemente 152 und 182 wieder ihre Blockierstellung einnehmen können, und zwar jeweils bedingt durch die Beaufschlagung seitens der Federkraftspeicher 166 und 196.

Bei den ersten Ausführungsbeispiel der erfindungsgemäßen Blockiereinrichtung 150 sind die Zugelemente 176 und 206 jeweils mit Betätigungselementen 222 bzw. 224 gekoppelt, die an den Querstreben 62 und 64 nahe den Lagerkörpern 102 und 104 angeordnet sind.

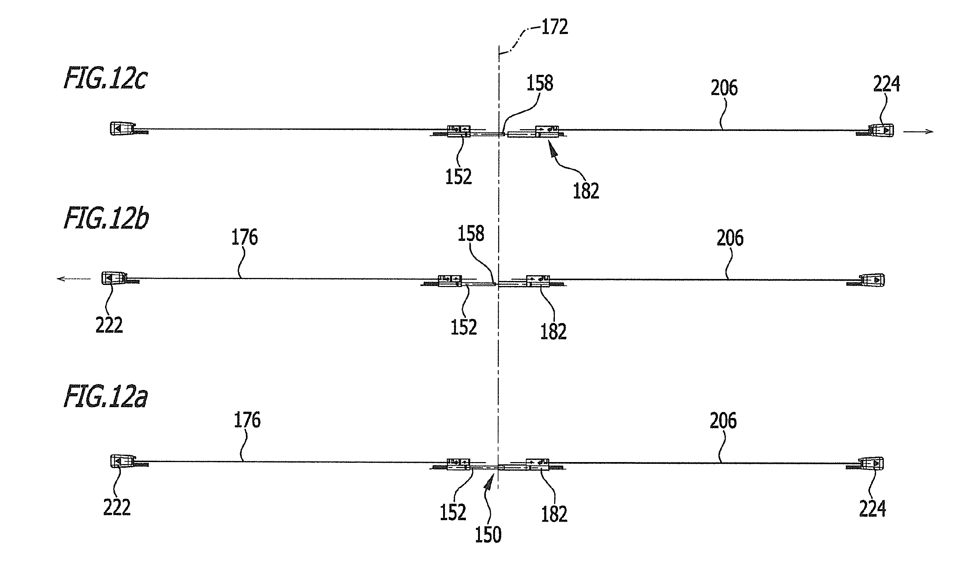

In Fig. 12a ist die Blockiereinrichtung 150 bei unbetätigten Betätigungselementen 222 und 224 dargestellt, so dass die Blockierelemente 152 und 182 mit ihren Formschlusselementen 158 und 188 ineinandergreifen, wobei der Vorsprung 158 die Trennebene 172 durchgreift.

In Fig. 12b ist dargestellt, was eine Betätigung des Betätigungselements 222 zur Folge hat.

Bei dieser Betätigung wird eine Zugwirkung auf das Zugelement 176 ausgeübt, so dass das Blockierelement 152 in Richtung parallel zur Mittelachse 154 von dem zweiten Blockierelement 182 weg verschoben wird und somit der Vorsprung 158 nicht mehr in die Aufnahme 188 eingreift, so dass das erste Blockierelement 152 in seiner Freigabestellung steht und somit nicht mehr die Trennebene 172 durchgreift.

In diesem Fall ist das Gelenk 80 um die Windschottfaltachse 82 schwenkbar.

Wird, wie in Fig. 12c dargestellt, das Betätigungselement 224 betätigt, so wird eine Zugwirkung auf das Zugelement 206 ausgeübt, welche das zweite Blockierelement 182 weg vom ersten in der Blockierstellung stehenden Blockierelement 152 soweit verschiebt, bis der die Trennebene 172 durchgreifende Vorsprung 158 nicht mehr in die Aufnahme 188 eintaucht, so dass in diesem Fall ebenfalls ein Verschwenken des Gelenks 80 um die Windschottfaltachse 82 möglich ist.

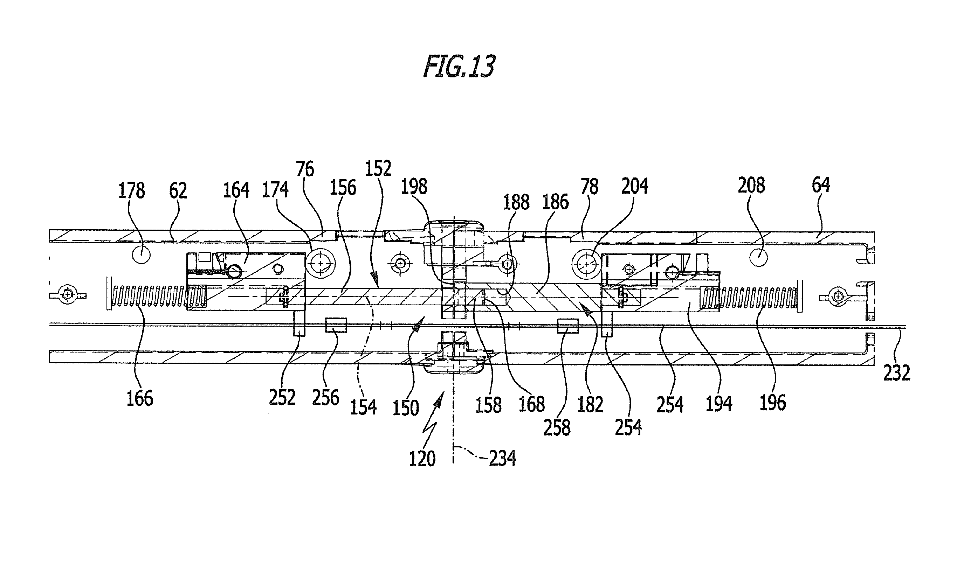

Bei einem zweiten Ausführungsbeispiel einer erfindungsgemäßen Blockiereinrichtung, dargestellt in Fig. 13, sind diejenigen Elemente, die mit denen des ersten Ausführungsbeispiels identisch sind, mit denselben Bezugszeichen versehen, so dass hinsichtlich der Beschreibung vollinhaltlich auf die Ausführungen hierzu im Zusammenhang mit dem ersten Ausführungsbeispiel Bezug genommen werden kann.

Im Gegensatz zum ersten Ausführungsbeispiel sind die Zugelemente 176 und 206 ersetzt durch ein durchgehendes Zugelement 232, welches sich zwischen zwei Betätigungselementen 242 und 244 erstreckt, die dem Gelenk 120 zugeordnet sind, wobei in diesem Fall, wie vorstehend beschrieben, das Gelenk 120 um die Abdeckungsklappachse 122 schwenkbar ist.

Das Zugelement 232 ist dabei durchgehend durch eine der Trennebene 172 entsprechende Trennebene 234 von dem einen Betätigungselement 242 zum anderen Betätigungselement 244 geführt.

Ferner weist, wie in Fig. 13 dargestellt, jeder der Mitnehmer 164 bzw. 194 einen relativ zum Zugelement 232 gleitend bewegbaren, insbesondere das Zugelement 232 gleitend führenden, beispielsweise umgreifenden, Arm 252 bzw. 254 auf.

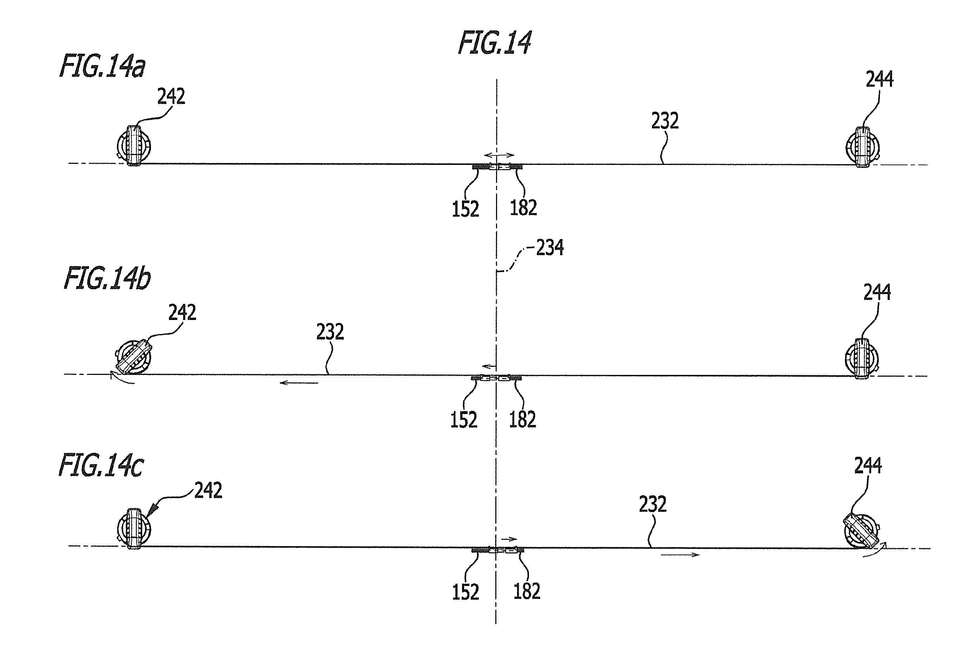

Ferner weist das Zugelement 232 in seiner unbetätigten Stellung (Fig. 14a), das heißt einer Stellung, in der weder das Betätigungselement 242 noch das Betätigungselement 244 betätigt sind, den Armen 252 bzw. 254 zugeordnete und am Zugelement 232 fixierte Zugkörper 256 bzw. 258 auf.

Wird, wie in Fig. 14b dargestellt, das Betätigungselement 242 betätigt, beispielsweise durch Drehen desselben und Zugwirkung auf das Zugelement 232, bewegt sich der Zugkörper 256 mit dem Zugelement 232 mit und wirkt dabei auf den Arm 252 in dem Sinne, dass das Blockierelement 152 von der Blockierstellung in die Freigabestellung bewegt wird, wie im Zusammenhang mit dem ersten Ausführungsbeispiel beschrieben, so dass daraufhin ein Schwenken um die Abdeckungsfaltachse 122 erfolgen kann.

Wird, wie in Fig. 14c dargestellt, das Betätigungselement 244 betätigt, so bewegt das Zugelement 232 den Zugkörper 258 mit und der Zugkörper 258 wirkt auf den Arm 254 und bewegt somit den Mitnehmer 194 mitsamt dem zweiten Blockierelement 182 von der Blockierstellung in die Freigabestellung, die ebenfalls bereits im Zusammenhang mit dem ersten Ausführungsbeispiel im Detail erläutert wurde.

In beiden Fällen gemäß Fig. 14b und Fig. 14c ist jeweils eine Freigabestellung eines der Blockierelemente 152 bzw. 182 erreichbar, um somit eine Schwenkbewegung um die entsprechende Achse, beispielsweise die Abdeckungsfaltachse 122 zu ermöglichen.

## Patentansprüche

1. Windstopeinrichtung für Kraftfahrzeuge, insbesondere für Cabrio-Fahrzeuge, umfassend ein Windschott (20) mit einem sich in einer Fahrzeugquerrichtung (28) erstreckenden Windschottrahmens (50) und einem eine Rahmenöffnung (84) des Windschottrahmens (50) verschließenden strömungshindernden Element (130), wobei das Windschott (20) durch mindestens ein Gelenk (70, 80) um eine Windschottfaltachse (82) zwischen einer entfalteten Stellung und einer zusammengefalteten Stellung faltbar ist, eine mit dem Windschott (20) um eine Schwenkachse (24) schwenkbar verbundene Abdeckung (22) mit einem sich in der Fahrzeugquerrichtung (28) und von der Schwenkachse (24) weg erstreckenden Abdeckungsrahmen (90) und mit einem eine Rahmenöffnung (124) des Abdeckungsrahmens verschließenden strömungshindernden Element (140), wobei der Abdeckungsrahmen (90) durch mindestens ein Gelenk (120) um eine Abdeckungsfaltachse (122) zwischen einer entfalteten Stellung und einer zusammengefalteten Stellung faltbar ist, und wobei mindestens eines der Gelenke (70, 80, 120) in der entfalteten Stellung durch eine Blockiereinrichtung (150) gegen ein Falten in die zusammengefaltete Stellung blockierbar ist,
**dadurch gekennzeichnet, dass** die Blockiereinrichtung (150) so ausgebildet ist, dass die Blockierung des jeweiligen Gelenks (70, 80, 120) nur durch aktive Betätigung eines Betätigungselements (222, 224, 242, 244) lösbar ist.

2. Windstopeinrichtung nach Anspruch 1, **dadurch gekennzeichnet, dass** die Blockiereinrichtung (150) ein auf einer Seite der jeweiligen Schwenkachse (82, 122) angeordnetes erstes Blockierelement (152) und ein auf der gegenüberliegenden Seite der jeweiligen Schwenkachse (82, 122) angeordnetes zweites Blockierelement (182) aufweist und dass die Blockierelemente (152, 182) in ihrer Blockierstellung formschlüssig ineinandergreifen.

3. Windstopeinrichtung nach Anspruch 2, **dadurch gekennzeichnet, dass** mindestens eines der Blockierelemente (152, 182) von einer Blockierstellung in eine Freigabestellung bewegbar ist und dass die Blockierung des jeweiligen Gelenks (70, 80) bereits dann gelöst ist, wenn eines der Blockierelemente (152, 182) in der Freigabestellung steht.

4. Windstopeinrichtung nach Anspruch 2 oder 3, **dadurch gekennzeichnet, dass** jedes der Blockierelemente (152, 182) in einer Blockierelementaufnahme (162, 192) zwischen der Blockierstellung und der Freigabestellung bewegbar gelagert ist und dass insbesondere die Blockierelemente (152, 182) zwischen der Blockierstellung und der Freigabestellung verschiebbar sind.

5. Windstopeinrichtung nach einem der Ansprüche 2 bis 4, **dadurch gekennzeichnet, dass** jedes der Blockierelemente (152, 182) ein Formschlusselement (158, 188) aufweist, das komplementär zum anderen Formschlusselement (188, 158) ausgebildet ist und dass in der Blockierstellung der Blockierelemente (152, 182) die Formschlusselemente (158, 188) ineinander greifen und dass insbesondere in der Freigabestellung eines der Blockierelemente (152, 182) die Formschlusselemente (158, 188) außer Eingriff stehen.

6. Windstopeinrichtung nach einem der Ansprüche 2 bis 4, **dadurch gekennzeichnet, dass** mindestens eines der Formschlusselemente als Vorsprung (158) ausgebildet ist, der in der Blockierstellung beider Formschlusselemente (158, 188) in das als Vorsprungaufnahme (188) ausgebildete andere Formschlusselement eingreift.

7. Windstopeinrichtung nach Anspruch 6, **dadurch gekennzeichnet, dass** das die Vorsprungaufnahme (188) aufweisende Blockierelement (182) in der Lage ist, den Vorsprung (158) in einer senkrecht zur jeweiligen Schwenkachse (82, 122) liegenden Bewegungsebene auf der Seite zu hintergreifen, welche die Blockierung eines Faltens von der entfalteten Stellung in die zusammengefaltete Stellung ermöglicht.

8. Windstopeinrichtung nach einem der Ansprüche 2 bis 7, **dadurch gekennzeichnet, dass** jedes der Blockierelemente (152, 182) durch einen Federkraftspeicher (166, 196) in Richtung seiner Blockierstellung beaufschlagt ist.

9. Windstopeinrichtung nach einem der Ansprüche 2 bis 8, **dadurch gekennzeichnet, dass** die Blockierelementaufnahmen (162, 192) an an das jeweilige Gelenk (70, 80 120) angrenzenden Enden von Streben des Windschottrahmens (50) oder des Abdeckungsrahmens (90) gehalten sind und dass insbesondere die Blockierelementaufnahmen (162, 192) in die Enden der an das Gelenk (70, 80, 120) angrenzenden Streben integriert sind.

10. Windstopeinrichtung nach einem der Ansprüche 2 bis 9, **dadurch gekennzeichnet, dass** die Blockierelemente (152, 182) mittels eines Betätigungselements (222, 224, 242, 244) von der Blockierstellung in die Freigabestellung bewegbar sind und dass insbesondere die Betätigungselemente (222, 224, 242, 244) an dem jeweiligen Rahmen (50, 90) angeordnet sind.

11. Windstopeinrichtung nach Anspruch 10, **dadurch gekennzeichnet, dass** zwischen dem jeweiligen Betätigungselement (222, 224, 242, 244) und dem jeweiligen Blockierelement (152, 182) eine Kopplung durch ein Zugelement (176, 206, 232) vorgesehen ist und dass insbesondere das Zugelement (176, 206) von dem jeweiligen Blockierelement (152, 182) zum Betätigungselement (222, 224) in dem jeweiligen Rahmen verläuft.

12. Windstopeinrichtung nach einem der Ansprüche 2 bis 11, **dadurch gekennzeichnet, dass** jedes Blockierelement (152, 182) über ein Zugelement (176, 206) mit dem entsprechenden Betätigungselement (222, 224) gekoppelt ist.

13. Windstopeinrichtung nach einem der Ansprüche 2 bis 11, **dadurch gekennzeichnet, dass** ein einziges Zugelement (232) von einem Betätigungselement zum anderen Betätigungselement quer zur jeweiligen Gelenkachse (82, 122) über das jeweilige Gelenk (70, 80, 120) hinweg verläuft und dass das Zugelement (232) mindestens einen Zugkörper (256, 258) aufweist, welcher bei Betätigung nur eines der Betätigungselemente (242, 244) und Bewegen des Zugelements (232) eines der Blockierelemente (152, 182) von der Blockierstellung in die Freigabestellung bewegt.

14. Windstopeinrichtung nach dem Oberbegriff des Anspruchs 1 oder nach einem der voranstehenden Ansprüche, **dadurch gekennzeichnet, dass** der Windschottrahmen (50) und der Abdeckungsrahmen (90) um die Schwenkachse (24) derart gegeneinander verschwenkbar sind, dass in einer abgeklappten Stellung des Windschottrahmens (50) der eine der Rahmen (50, 90) in der Rahmenöffnung (124, 84) des anderen der Rahmen (90, 50) lieg und dass insbesondere ausgehend von der abgeklappten Stellung des Windschottrahmens (50) der Windschottrahmen (50) und der Abdeckungsrahmen (90) in derselben Faltrichtung (128) faltbar sind und dass insbesondere die Windschottfaltachse (82) und die Abdeckungsfaltachse (122) in der abgeklappten Stellung des Windschottrahmens (50) im Wesentlichen miteinander zusammenfallend angeordnet sind.

15. Windstopeinrichtung nach einem der voranstehenden Ansprüche, **dadurch gekennzeichnet, dass** die Windschottfaltachse (82) in einer Ebene (86) liegt, die an die Windschottfaltachse (82) angrenzende Enden (72, 74, 76, 78) der Querstreben (56, 58, 62, 64) des Windschottrahmens (50) nicht schneidet und dass insbesondere die Abdeckungsfaltachse (122) in einer Ebene (126) liegt, die an die Abdeckungsfaltachse (122) angrenzende Enden (112, 114) der Querstreben (106, 108) des Abdeckungsrahmens (90) nicht schneidet.
